# EUROPEAN PATENT APPLICATION

(11) **EP 4 375 064 A1**
(43) Date of publication of application: **29.05.2024**
(21) Application number: 22209746.1
(22) Date of filing: 25.11.2022
(51) Int. Cl.: B32B 27/32, B32B 27/36, B32B 27/40, B65D 85/00, C08G 18/10, C08G 18/28, C08G 18/42, C08G 18/72, C08G 18/76, C08G 18/79, C09J 175/06, C09J 175/08

(54) **RETORTABLE SOLVENT FREE LAMINATION ADHESIVES**

(71) Applicant: Sun Chemical Corporation, Parsippany, NJ 07054 (US)
(72) Inventor: The designation of the inventor has not yet been filed
(74) Representative: Carpmaels & Ransford LLP

(57) **Abstract**

The present invention is related to solvent-free, two-pack adhesive kit comprising an isocyanate-functionalised, aliphatic polyurethane prepolymer and a poly crosslinker. The present invention is also related to laminate adhesive comprising the components of the adhesive kit of the invention and a retort pouch comprising the same.

## Description

### FIELD OF THE INVENTION

The present invention relates to solvent-free, two-pack adhesives and the use of said adhesives in providing laminates for retort applications.

### BACKGROUND OF THE INVENTION

Retort is a well-known process in the packaging industry where hermetically sealed pouches containing moist foodstuffs are processed at elevated temperatures, typically in excess of 100 °C, to both cook and sterilize the food.

Solvent-based adhesives are used in retort applications as they provide the bonding strength between the layers of the packaging laminate under the conditions of the retort process that is required to ensure the integrity of the laminate without delamination failures. In particular, solvent-based adhesive have high resistance to thermal degradation, partially because solvent-based adhesives allow for the use of higher molecular weight starting materials, which build stronger networks that are less susceptible to forming migratable, small-molecule species upon thermolysis. The solvent maintains a suitable viscosity of the composition for use in lamination, which with otherwise be increased as a result of the incorporation of the high molecular weight materials.

It is therefore desirable to provide an alternative solvent-free adhesive for retort applications, for example, to eliminate the need for removing and handling volatile solvents, such as ethyl acetate and methyl ethyl ketone. Furthermore, higher lamination press speeds are achievable with solvent-free adhesives.

While solvent-free adhesives are known in the art, without the presence of a solvent, the molecular weight of the components must be limited in order to provide a composition with a viscosity suitable for use in lamination. However, low molecular weight species can migrate through the composition and contaminate foodstuffs with which they contact.

One method for reducing the amounts of migratable species in adhesives is to remove the residual isocyanate monomer using evaporation techniques. In this regard, EP3176196 relates to a one-pack lamination adhesive comprising aromatic isocyanate polyurethane prepolymers, in which the amount of free diisocyanate monomer in the polyurethane prepolymer is reduced to less than 0.1% (w/w) using of a thin-film evaporator. The residual diisocyanate monomer is removed under pressures of 0.1 mbar or less at 140 °C. However, EP3176196 does not disclose two pack adhesives, including those according to the present invention comprising aliphatic polyurethane prepolymers. Moreover, EP3176196 does not disclose the potential of such adhesive compositions for the preparation of flexible packaging laminates suitable for the manufacture of retortable pouches.

US5202001 discloses the use of a thin-film evaporator to remove an aromatic diisocyanate TDI (toluene diisocyanate) from an isocyanate-functionalised polyurethane prepolymer. However, the use of aromatic isocyanates in making polyurethane prepolymers is undesirable due to the risks associated with the generation of potentially harmful primary aromatic amines, which can be produced under retort conditions. Moreover, US5202001 does not relate to adhesive compositions and also does not disclose adhesives according to the current invention comprising aliphatic polyurethane prepolymers. Furthermore, US5202001 does not disclose the use of such adhesives in the preparation of retortable laminates.

A number of prior art documents relate to reducing the amounts of residual diisocyanate monomer in polyurethane prepolymers by distillation in the presence of what are referred to as "inert solvents". In this regard, US20030065124 discloses the removal of free diphenylmethane diisocyanate (MDI) via a reduced-pressure distillation using a wiped film evaporator. The process employs dimethyl phthalate as the "inert solvent", having a boiling point below that of MDI. Similarly, WO2018013688 relates to polyurethane prepolymers prepared from aromatic paraphenylene diisocyanate (PPDI), from which free monomer can be removed also using a wiped film evaporator. In this case, dimethyl adipate is used as the "inert solvent".

Neither US20030065124 nor WO2018013688 relate to adhesive compositions and thus neither disclose a two pack adhesives according to the present invention comprising aliphatic polyurethane prepolymers, nor the use of such an adhesive in the preparation of laminates suitable for retort applications. Moreover, in contrast to the aliphatic polyurethane isocyanate functional prepolymers of the present current invention, the polyurethane prepolymers of US20030065124 and WO2018013688 are prepared using solvents.

CN110922929 relates to a one-pack isocyanate functional polyurethane prepolymer-based adhesive, which can be used to manufacture flexible laminates. However, CN110922929 does not relate to two-pack adhesives and does not disclose the reduction of the amount of free isocyanate monomer to less than 0.1% (w/w) of the polyurethane prepolymer component, nor is there any teaching of how the viscosity of the disclosed compositions could be maintained at a level suitable for use in a laminating machine, while removing the residual isocyanate monomer. CN110922929 does not disclose use of a wiped film evaporator. Moreover, CN110922929 does not teach that using aliphatic polyurethane precursors provides laminate adhesives with improved bonding strength under retort conditions. Moreover, the one-pack CN110922929 compositions comprise significant amounts of catalyst in order to function, which would result in a significantly reduced pot life, unsuitable for use in a two-pack adhesive kit.

CN102604583B relates to solvent-free, two-pack adhesives that can be used in the manufacture of flexible laminates that can resist boiling. However, CN102604583B does not disclose reducing the amount of free isocyanate monomer to less than 0.1% (w/w) of the polyurethane prepolymer component, nor is there any teaching of how the viscosity of the disclosed compositions could be maintained at a level suitable for use in a laminating machine, while removing the residual isocyanate monomer. CN102604583B does not disclose the use of a wiped film evaporator. Furthermore, a reactive silane is an essential component of the CN102604583B adhesive. Moreover, CN102604583B does not evaluate the adhesives under retort conditions.

To the best of the inventors' knowledge, the successful use of solvent-free, two-pack lamination adhesives comprising aliphatic polyurethane prepoloymers comprising an amount of free isocyanate monomer of less than 0.1% (w/w), which are suitable for retort applications, has not been disclosed. Therefore, the adhesive of the current invention is advantageous at least in this respect. Further advantages associated with the adhesive compositions of the present invention are described herein.

### SUMMARY OF THE INVENTION

The present invention provides a solvent-free, lamination adhesive kit comprising a) an isocyanate-functionalised, aliphatic polyurethane prepolymer comprising monomeric units derived from aliphatic isocyanate monomers; and b) a polyol crosslinker, wherein the amount of free isocyanate monomer present in the polyurethane prepolymer is less than 0.1% (w/w) of said prepolymer.

The invention further provides a laminate adhesive comprising the components of the solvent-free, lamination adhesive kit of the invention mixed together in a single composition. The invention further provides a retort pouch comprising a laminate adhesive formed from the components of the kit of the invention.

The invention further provides a method of providing a multi-laminate structure, comprising forming a laminate adhesive from the components of the kit of the invention and applying the composition onto a flexible film.

The invention further provides a method of making the kit of the invention, comprising the steps of a) reacting an aliphatic isocyanate with a polyester and/or polyether polyol to obtain an isocyanate-functionalised, aliphatic polyurethane prepolymer comprising monomeric units derived from aliphatic isocyanate monomers; b) reducing the residual isocyanate monomer present in the prepolymer to less than 0.1% (w/w) of the prepolymer; and c) introducing a polyol crosslinker to the kit.

The invention further provides the use of the kit of the invention for forming a laminate adhesive. The invention further provides the use of the kit of the invention for improving bonding strength under retort conditions of a multi-laminate structure formed from a flexible film and a laminate adhesive formed from the components of said kit.

### DETAILED DESCRIPTION

### Definitions

Aromatic monomer = a monomer wherein the polymerisable functional group is directly connected to an aromatic group.
Aliphatic monomer = a monomer wherein the polymerisable functional group is not directly connected to an aromatic group.
Aromatic isocyanates = isocyanates comprising an NCO group directly attached to an aromatic ring.
Aliphatic isocyanates = isocyanates comprising an NCO group, wherein the NCO group is not directly attached an aromatic ring. Aliphatic isocyanates include alicyclic isocyanates.
Aromatic polyurethane = polyurethane formed from aromatic isocyanates.
Aliphatic polyurethane = polyurethane formed from aliphatic isocyanates. The skilled person would appreciate that it is the identity of the isocyanate alone (being either aliphatic or aromatic) that dictates the nature of polyurethane as being either aliphatic or aromatic.
Aromatic carboxylic acid = carboxylic acid comprising an acid group directly attached to an aromatic ring.
Aliphatic carboxylic acid = carboxylic acid comprising an acid group, wherein the acid group is not directly attached an aromatic ring. Aliphatic isocyanates include alicyclic isocyanates.
Free isocyanate monomer = a monomeric isocyanate species that has not undergone a reaction with a comonomer, e.g., a polyol. Unreacted starting material from the polymerisation reaction, e.g., that used to form the polyurethane prepolymer.
Retort pouch = Type of food packaging made from a laminate of flexible plastic
Retort conditions = methods of cooking and sterilization of food in retort packaging, typically involves heating at elevated temperatures, e.g., 115 to 125 °C for a period of time, e.g., 20-60 minutes.
Two-pack adhesive = an adhesive composition comprising two components, with one component inducing crosslinker of the other component.
One-pack adhesive = an adhesive composition comprising one component, which typically undergoes crosslinking through reaction with residual moisture.
(w/w) = the mass of a component as a percentage of the total mass of the composition into which that component is incorporated.
Molecular weight of monomers with defined structures is calculated from their structural formula.
Molecular weight of oligomers and polymers is measured by size exclusion chromatography (GPC), using the method defined in the examples.
PET = PolyEthylene Terephthalate
PE = PolyEthylene
ALU = Aluminium
CPP = Cast PolyProylene
OPA = Nylon
AlOx - = Aluminium oxide
SiOx - = Silicon oxide
OPP = Oriented PolyPropylene
OPP = Oriented PolyEthylene
LDPE = Low-Density PolyEthylene
LLDPE = Linear Low-Density PolyEthylene
VM-PET = Vacuum-Metalized Polyethylene Terephthalate

Unless otherwise stated, all ranges include the respective end points. For example, a range of between 3 and 9, includes the end points 3 and 9. However, where an end point is defined as being "more than" one value and/or up to "less than" another value, the range does not include the respective end points.

Unless otherwise stated, wt% (w/w) refers to the mass of the component in question in relation to all components present in the composition. The wt% (w/w) of the free isocyanate monomer is the mass of said species in relation to the total mass of the polyurethane prepolymer.

### The Invention

The present invention provides an improved two-pack, solvent-free lamination adhesive kit comprising an aliphatic polyurethane prepolymer. The adhesive kit of the invention is suitable for the preparation of flexible packaging laminates that may be used in retort applications.

To the best of the inventors' knowledge, this is the first reported instance of the use of solvent-free, aliphatic, two-pack lamination adhesives in the preparation of flexible, multiply laminates for retort applications, with the laminates resisting thermal processing temperatures of 100°C and greater.

The two-pack, solventless lamination adhesive kit of the present invention comprises an aliphatic isocyanate functional polyurethane prepolymer produced from aliphatic isocyanate monomers, such as diisocyanates. The amount of residual monomer in the polyurethane prepolymer for use in the invention is less than 0.1% (w/w) of said prepolymer. The amount of residual monomer can be reduced by using a wiped film evaporator. The adhesive of the present invention is especially suited to the preparation of flexible packaging laminates used in the manufacture of retortable, pasteurizable and boilable pouches.

The kit of the invention can therefore be used to improve bonding strength under retort conditions of a multi-laminate structure formed from a flexible film and a laminate adhesive formed from the components of the kit of the invention. The improved bonding strength relates to increased delamination resistance of said laminate structure compared to a comparative laminate structure formed from a flexible film and a laminate adhesive that is not formed from the components of the kit of the invention. Retort conditions include heating at 100 °C or higher for a period of 20 minutes, such as heating at 120 °C for 30 minutes or 135 °C for 20 minutes. Retort conditions induce pressure differentials between the pressure inside the retort package and atmospheric pressure, which can put the adhesives used to seal the retort package under strain. For example, low retort testing may involve heating a retort pouch in an autoclave at around 120 °C for at least 30 minutes, wherein the autoclave is at a pressure of around 1.5 bar. High retort testing may inv involve heating a retort pouch in an autoclave at around 135 °C for at least 20 minutes, wherein the autoclave is at a pressure of around 2.6 bar.

### Advantages Associated with the Present Invention

The inventors have found incorporating into an adhesive an aliphatic polyurethane prepolymer for use in the invention, comprising monomeric units derived from aliphatic isocyanate monomers, provides said adhesive with improved bonding under retort conditions. The improvements are observed relative to comparative adhesive comprising an aromatic polyurethane prepolymer comprising monomeric units derived from aromatic isocyanate monomers.

The kit of the invention is also improved relative to comparative adhesives comprising polyurethane prepolymers comprising a residual isocyanate monomer content above that required by the present invention.

The aliphatic, two-pack solvent-free lamination adhesive kit of the present invention is suitable for the preparation of flexible packaging laminates that are resistant to retort conditions of ≥100°C for periods of ≥10 minutes. To date, two-pack, solvent-free lamination adhesives have found widespread use in less demanding applications but have failed in retort applications.

Moreover, a consequence of using aliphatic isocyanate monomers in the preparation of the adhesives for use in the present invention is that the risk associated with the generation of potentially harmful, primary aromatic amines is removed. Such aromatic amines can be produced under the retort conditions when using adhesives comprising polyurethane prepolymers formed from aromatic di-isocyanates. Using an aliphatic isocyanate-based material means that no there is no risk of forming primary aromatic amines, especially under retort conditions.

A further and perhaps more significant advantage is that the amount of free diisocyanate monomer in the polyurethane prepolymer component of the two-pack adhesive kit of the invention is reduced to levels of less than 0.1% (w/w), based on the weight of the polyurethane prepolymer. This is important with respect to the hazards relating to the prepolymer. In particular, reducing the free diisocyanate monomer content in the polyurethane prepolymer to less than 0.1% (w/w) ensures that the hazards associated with monomeric isocyanates, such as diisocyanates (e.g., hexamethylene diisocyanate), can be alleviated to the extent that, under current Classification, Labelling and Packaging of Substances and Mixtures (CLP) guidelines, the prepolymer is free of any labelling relating to the hazards associated with free diisocyanate monomer. This is advantageous for the handling of the inventive adhesive kit compared with similar, conventional two-pack lamination adhesive kits/compositions. Reducing the amount of free monomeric isocyanates, such as xylylene diisocyanate, present in an adhesive, for example, using a wiped film evaporator, has not been previously reported.

Moreover, even if primary aliphatic amines are produced when subjecting the adhesive of the invention to retort conditions, the reduction of the amount of free isocyanate monomer to less than 0.1% (w/w) nevertheless minimizes the risks associated with migratable species present in the adhesive.

Solvent-free lamination adhesives, comprising 100% dry matter do not contain organic solvents or water to reduce the viscosity of the polymeric material to such a level that the material can be applied with a lamination machine at temperatures of <90°C, such as <80°C. As a result of the above-mentioned advantages, the inventors have found a way of producing a solvent-free adhesive, wherein the required viscosity can be achieved through control of the molecular weight of the components, without the problems typically associated with the presence of migratable, low molecular weight/small molecule components.

Furthermore, the inventors have discovered that using a polyester polyol comprising monomeric units derived from a mixture of aromatic monomers and aliphatic monomers provides a polyurethane prepolymer with improved mechanical properties.

The two-component adhesive composition has the further advantages of stronger bonding, better chemical resistance, and quick cure, when compared to analogues one pack adhesive compositions. One-pack adhesives cure only using the moisture present in/on the substrate and in the air. Typically, one-pack adhesives work well with paper substrates laminated either to paper or to film. However, with film-to-film lamination or film-to-aluminium lamination, the reaction and the bond strength development can be very slow, as there is not as much moisture available or it is difficult for the moisture to reach the isocyanate.

Typically, a catalyst (e.g., ethyl morpholine, DMDEE = 2,2-Dimorpholinodiethylether, or another tertiary amine containing compound, or a metallic salt) is added to a one-pack adhesive to compensate and make the isocyanate group more reactive/sensitive to moisture A two-pack adhesive does not require such a catalyst, which means that the amount of migratable species can be further reduced. Instead, the isocyanate groups in a two-pack adhesive react with the polyol that is intimately mixed and provides readily available reactive sites. The isocyanate groups can also react with residual moisture.

### Aliphatic Polyurethane Prepolymer

Polyurethanes with NCO terminal groups are typically obtained by reacting polyfunctional alcohols with an excess of polyisocyanate monomers. Generally, diisocyanates are used in order to obtain a prepolymer with a molecular weight that has a viscosity compatible with use in a lamination machine at temperatures of <80-90°C. This is because diisocyanates (as opposed to isocyanates of higher functionality) are only capable of reacting with two polyol species.

The polyurethane prepolymer for use in the present invention is characterized by having a viscosity at 80°C ranging from 800 mPas to 20,000 mPas, or preferably 1,000 mPas to 10,000 mPas, or more preferably 2,000 mPas to 7,000 mPas. The polyurethane prepolymer for use in the present invention preferably has a content of reactive isocyanate groups (%NCO) ranging from 3% to 16%, or more preferably from 5% to 10%.

It is known that by operating in this way, a certain quantity of diisocyanate monomers used in stoichiometric excess remains present in the reaction mixture at the end of the reaction, regardless of the reaction time. The aliphatic polyurethane prepolymer for use in the invention is therefore isocyanate-functionalised, such that reactive NCO groups are attached to the prepolymer. The aliphatic polyurethane prepolymer for use in the invention comprises at least two isocyanate groups per prepolymer. The aliphatic polyurethane prepolymer for use in the invention is preferably difunctionalised with isocyanate groups, such as wherein the aliphatic polyurethane prepolymer for use in the invention is linear and comprises an isocyanate group at either terminus.

The polyurethane prepolymer for use in the invention may comprise three or more isocyanate groups per prepolymer, such as four or more, or five or more isocyanate groups per prepolymer.

The polyurethane prepolymer is preferably linear. For the purposes of the present invention, a "linear" polyurethane prepolymer is typically derived from difunctional isocyanates and difunctional polyols, such that each isocyanate derived moiety is covalently linked to a maximum of two polyols and each polyol derived moiety is covalently linked to a maximum of two isocyanates. A linear polyurethane prepolymer may comprise monomeric components that are in themselves branched, such as a branched glycol.

The aliphatic polyurethane prepolymer for use in the invention is preferably derived from a polyester polyol and more preferably from polyester polyol comprising monomeric units derived from aromatic monomers, such as aromatic dicarboxylic acids.

It is preferred that of the polyol components used to make the polyurethane prepolymer for use in the invention, at least 50wt% are polyester polyols, such as at least 60wt%, at least 70wt%, more preferably at least 80wt%, or at least 90wt% are polyester polyols. It is more preferred that all of polyols used to make the polyurethane prepolymer for use in the invention are polyester polyols. The inventors have found that polyester polyols provide desirable mechanical properties at high temperature to the polyurethane prepolymer for use in the invention.

### Reduction of free isocyanate monomer content

Even at room temperature, diisocyanates such as hexamethylene diisocyanate (HDI), isophorone diisocyanate IPDI, toluene diisocyanate (TDI) and diphenylmethane diisocyanate (MDI) have a significant vapor pressure. This gives rise to serious health risks at the application stage, as these species are toxic due to their sensitizing and irritant actions. A user is required by law to practice specific measures to protect personnel during use, and this involves significant additional equipment, such as that designed to keep the air breathable or to maintain said substances below the maximum concentrations allowed in the workplace. A user is therefore required to install expensive protection apparatus for personnel exposed to such product vapors or the aerosols developed by the dynamic application conditions on rotary machines. Reagents of this type are regulated by hazardous substances legislation and are required to be labelled as hazardous materials. The labelling obligation is accompanied by the requirement to take special packaging and transport measures.

Many polyurethane adhesives of the art comprise more than 0.1% (w/w) (the threshold prescribed by the CLP Regulation, below which the product is not considered hazardous) by weight of residual monomer (usually volatile diisocyanates, such as free TDI, MDI or other isocyanate monomers). In particular, when a molar excess of isocyanate functional groups of the isocyanate is used, relative to the hydroxyl functional groups of the polyol, an excess of free isocyanate monomer will remain in the reaction mixture after formation of the polyurethane prepolymer. Unless additional processing steps are taken to remove this excess free monomer, greater than 0.1% (w/w) of free isocyanate monomer will remain in the prepolymer, necessitating the above-mentioned safety precautions. Moreover, if such prepolymers are used as adhesives for food packaging, then contamination of the food products with migratable monomers can also result.

Thus, the solvent-free, lamination adhesive kit of the present invention comprises an isocyanate-functional, aliphatic, polyurethane component that has an amount of free isocyanate monomer of less than or equal to 0.1% (w/w) relative to said prepolymer. For example, the isocyanate functional polyurethane component preferably comprises less than 0.1% (w/w), or 0.08% (w/w) or less of free isocyanate monomer. The polyurethane prepolymer is subjected to additional processing steps outlined herein in order to reduce the amount of free isocyanate monomer.

The low free monomeric isocyanate monomer levels required by the invention may be achieved by stripping the unreacted isocyanate monomer from the polyurethane prepolymer using a wiped film evaporator. The evaporator may be used at temperatures between 100-250°C, or preferably between 120-200°C, or more preferably between 140-180°C. The evaporator may operate under a pressure of less than 5 mbar, or preferably less than 0.5 mbar, or more preferably less than 0.1 mbar. The evaporator may be operated for a total contact time of less than 30 min, or preferably less than 15 min, or more preferably less than 5 min. The evaporator may be operated at a pressure of 0.1 mbar or less and at a temperature of 140°C-180 °C.

### Method of Making the Polyurethane Prepolymer for Use in the Invention

The polyurethane prepolymer for use in the present invention may be obtained by a process comprising the following protocol:
A) reacting an aliphatic diisocyanate with a polyester polyol and/or a polyether polyol, each having a number average molecular weight of ≤1000 g/mol, in an NCO:OH molar ratio of greater than 2.5:1.0,
   i. optionally using a catalyst; and
   ii. optionally using an acid compound,
      to obtain an NCO-terminated prepolymer; and
B) subjecting the NCO-terminated prepolymer obtained in stage A) to one or more stripping stages using a series of one or more wiped-film evaporators and/or short-path evaporators.

Stage A and B are conducted according to known procedures and operating conditions.

The final polyurethane prepolymer thus obtained has the following characteristics after removal of the free isocyanate monomer:
- %NCO of >7%
- Viscosity at 50°C of < 30,000 mPas
- wt% free diisocyanate monomer of <0.1%

The method of making the polyurethane prepolymer for use in the invention may be free of solvent. In other words, the polyurethane prepolymer for use in the invention may be formed by using only reagents that themselves are incorporated into the prepolymer.

### Aliphatic Isocyanates

Examples of aliphatic isocyanates suitable for the preparation of the isocyanate-functionalized polyurethane prepolymer for use in the invention include tetramethyl xylylene diisocyanate (TMXDI), isophorone diisocyanate (IPDI) and isomeric mixtures thereof, 1,6-hexane diisocyanate (HDI), xylylene diisocyanate (XDI), pentamethylene diisocyanate (PDI), methane dicyclohexyl diisocyanate and isomeric mixtures thereof.

In particular, the most preferable isocyanate monomers are the diisocyanates isophorone diisocyanate (IPDI) and isomeric mixtures thereof, 1,6-hexane diisocyanate (HDI), xylylene diisocyanate (XDI), and combinations thereof.

The skilled person will appreciate that while the advantages associated with the present invention derive from the use of an aliphatic polyurethane precursor comprising monomeric units derived from aliphatic isocyanates, this does not exclude the presence of a small amount of non-aliphatic isocyanate in the prepolymer, provided that such an amount does not affect these advantageous properties. Accordingly, for the purposes of the present invention, an "aliphatic polyurethane prepolymer" is derived from greater than 80mol% aliphatic isocyanates, relative to the total moles of isocyanate incorporated into the prepolymer. Preferably, the aliphatic polyurethane prepolymer for use in the invention is derived from greater than 90mol%, more preferably greater than 95 mol%, aliphatic isocyanates, relative to the total moles of isocyanate incorporated into the prepolymer. Most preferably, the only isocyanates incorporated into the aliphatic polyurethane prepolymer for use in the invention are aliphatic isocyanates.

### Polyester Polyol

The polyol for use in making the isocyanate-functionalised, aliphatic polyurethane prepolymer for use in the invention is preferably a polyester polyol and more preferably a polyester polyol comprising monomeric units derived from aromatic monomers.

The polyester polyol for use in the invention has been selected to provide a desirable combination of properties. In particular, the polyol is selected so that when incorporated into the polyurethane prepolymer for use in the invention, the polyurethane prepolymer has desirable mechanical properties at high temperature and a final viscosity that is suitable for use in a lamination machine at 80-90°C.

The inventors have found a particularly preferred polyol for use in the invention is characterized as follows:
1. Comprises a mixture of aromatic and aliphatic dicarboxylic acids;
2. Comprises a mixture of linear and branched short chain glycols;
3. Has a final OH number ranging from 110 to 400 mgKOH/g;
4. Has a viscosity ranging from 500 to 10,000 mPas at 23°C

While the polyester polyol for use in the invention may comprise other components, such as polyether segments, its preferred that the at least 50% of the monomeric units present are polyester, such as at least 60%, at least 70%, preferably at least 80%, or at least 90% of the monomeric units present are polyether. The polyester polyol for use in the invention may only comprise polyester monomeric units.

The polyester and polyether polyols for use in the invention are preferably linear. In the context of the invention, a "linear" polyester polyol is derived from difunctional (and optionally also monofunctional) monomers, such that each monomer unit can react with a maximum of two other monomers. In other words, the maximum functionality of the monomers is two. For example, a dicarboxylic acid and a diol make a linear polyester. A linear polyester may comprise monomeric components that are in themselves branched, such as a branched glycol. The same applies to polyethers.

### Aromatic and Aliphatic Monomers

When used to formulate the lamination adhesive of the invention, the inventors found that a polyurethane prepolymer made with a polyester polyol backbone is advantageous because the resulting polyurethane prepolymer exhibits higher mechanical properties (tear strength) at the typical temperatures for retorting process (100-135°C). When used to formulate the lamination adhesives of the invention, polyester polyols comprising at least 10wt% of monomeric units derived from aromatic monomers are preferred, and more preferably at least 20wt% because, in general, they exhibit improved mechanical properties at the typical temperatures for retorting process and, in particular, improved bonding strength under retort conditions. Without wishing to be bound by theory, the inventors postulate that the improvements relate to higher hydrolysis resistance and higher glass transition temperature (T_{g}) of said polyester polyols.

Polyurethanes made with a polyester polyol backbone are generally more viscous than those made with a polyether backbone; and polyester polyols containing aromatic rings in the backbone are even more viscous than pure aliphatic polyester polyols. Therefore, the inventors have found that by incorporating a mixture of aliphatic and aromatic groups into the polyester polyol for use in the invention provides polyurethane prepolymer with both improved mechanical properties and a viscosity suitable for use in adhesive laminate applications.

The polyester polyol for use in the invention may comprise between 10 and 55wt% of monomeric units derived from aromatic monomers, such as preferably between 15 and 45wt%, or more preferably between 15 and 35wt%, such as between 20 and 30wt% of monomeric units derived from aromatic monomers relative to the total wt% of the polyester polyol. The aromatic monomers may be aromatic dicarboxylic acids, such as isophthalic acid.

The polyester polyol for use in the invention may comprise between 45wt% and 90wt% of monomeric units derived from aliphatic monomers, such as preferably between 55 and 85wt%, or more preferably between 65 and 85wt% of monomeric units derived from aliphatic monomers relative to the total mass of the polyester polyol . The aliphatic monomers may be aliphatic dicarboxylic acids, such as sebacic acid. The aliphatic monomers may be aliphatic polyols, such as aliphatic glycols and diols, including but not limited to neopentyl glycol, 1,6-hexanediol, 3 methyl 1-5 pentane diol, monoethylene glycol, and combinations thereof.

The polyester polyol for use in the invention may comprise between 15 and 35% of monomeric units derived from aromatic monomers and between 65 and 85wt% of monomeric units derived from aliphatic monomers.

The polyester polyol for use in the invention may be formed from between 10 and 55wt% aromatic monomers, such as preferably between 15 and 45wt%, or more preferably between 15 and 35wt%, such as between 20 and 30wt% of aromatic monomers relative to the total amount of monomers used to form the polyester polyol. The polyester polyol for use in the invention may be formed from between 45wt% and 90wt% of aliphatic monomers, such as preferably between 55 and 85wt%, or more preferably between 65 and 85wt% of monomeric units derived from aliphatic monomers relative to the total amount of monomers used to form the polyester polyol.

Aromatic dicarboxylic acids suitable for the preparation of the polyester polyol for use in the invention include but are not limited to terephthalic acid, isophthalic acid, phthalic anhydride. Aliphatic dicarboxylic acids suitable for the preparation of the polyester polyol for use in the invention include but are not limited to linear C₂-C₁₄ linear dicarboxylic acids, such as succinic acid, glutaric, adipic acid, sebacic acid, azelaic acid, and combinations thereof.

The weight ratio of aromatic: aliphatic dicarboxylic acids incorporated into the polyol for use in the invention may be from 10:1 to 1:10, preferably 4:1 to 1:4, and more preferably 2:1 to 1:2. The weight ratio of aromatic: aliphatic dicarboxylic acids incorporated into the polyol for use in the invention may be between 1.5: 1 to 1:1.5, such as being incorporated in substantially equal wt%.

### Linear and Branched Short Chain Glycols

Linear, short-chain glycols suitable for the preparation of the polyester polyol for use in the invention include but are not limited to linear C₁-C₆ diols, such as 1,2 ethanediol, 1,3 propanediol, 1,4 butanediol, 1,5 pentanediol, 1,6 hexanediol, and combinations thereof. Branched short chain glycols suitable for the preparation of the polyester polyol for use in the invention include but are not limited to C₁-C₆ branched diols, such as 1,2 propanediol, 1,2 butanediol, 1,3 butanediol, neopentylglycol, 1,3 methylpentanediol, 2-methyl-1,3-propanediol, and combinations thereof.

The glycols for use in the invention preferably have a molecular weight of less than 500 gmol⁻¹, such as less than 300 gmol⁻¹ and preferably less than 200 gmol⁻¹.

The weight percent ratio of linear: branched short chain glycols incorporated into the polyol for use in the invention may be from 10:1 to 1:10, preferably 4:1 to 1:4, and more preferably 2:1 to 1:2. The weight ratio of linear:branched short chain glycols dicarboxylic acids incorporated into the polyol for use in the invention may be between 1.5:1 to 1:1.5, such as being incorporated in substantially equal wt%.

### Prepolymer Additives

The prepolymer for use in the invention can be used "as is" (i.e., in the form afforded from the above-mentioned method) or after the addition of additives, such as adhesion promoters, viscosity and rheology regulators, water scavengers, anti-skinning agents, and anti-bubbling agents.

In particular, the use of an adhesion promoter, for example silanes containing groups that react with isocyanate groups (such as 3-aminopropyltriethoxysilane), is advantageous when the adhesive system is to be used on metal or metallized substrates such as aluminum. Such an adhesion prompter can be incorporated into the polyol crosslinker. However, such a component is not essential to the adhesive kit of the invention. The inventors have found that the adhesive of the invention performs well under retort conditions, even in the absence of a silane additive that reacts with the isocyanates. Accordingly, the polyol functional crosslinker for use in the invention may not comprise a silane compound capable of reacting with isocyanates.

The polyurethane adhesive of the invention can also be formulated with the addition of one or more low viscosity polyisocyanates, such as isocyanate hexamethylenediisocyanate (HDI) trimers (e.g. POLURENE MT100, POLURENE MT100LV and POLURENE MT100LLV) and hexamethylenediisocyanate (HDI) allophanates, to reduce the viscosity of the final system.

If desired, the urethane formation reaction can be accelerated by adding suitable catalysts during preparation stage. Catalysts suitable for the urethanization reaction are known and comprise amines and organometallic compounds. However, such a component is not essential to the adhesive kit of the invention. The inventors have found that the adhesive of the invention performs well under retort conditions, even in the absence of a catalyst. Accordingly, the polyurethane prepolymer for use in the invention (and kit of the invention) may not comprise a catalyst.

Examples of catalysts suitable for use in the invention include triethylamine, tributylamine, dimethylbenzylamine, dicyclohexylmethylamine, dimethylcyclohexylamine, N,N,N',N-tetramethyldiamine methyl ether, bis(dimethylaminopropyl)urea, N-methyl or N-ethyl morpholine, N,N'-dimorpholinodiethyl ether (DMDEE), N-cyclohexylmorpholine, N,N,N' ,N' -tetramethylethylenediamine, N,N,N' ,N' -tetramethylbutylenediamine, N,N,N' ,N' -tetramethyl-1,6-hexanediamine, pentamethyldiethylenetriamine, dimethylpiperazine, N-dimethylaminoethylpiperidine, 1,2-dimethylimidazol, N-hydroxypropylimidazol, 1-azabicyclo-[2,2,0]-octane, 1,4-diazabicyclo-[2,2,2]octane (DABCO), alkanolamines such as triethanolamine, triisopropanolamine, N-methyl and N-ethyl diethanolamine, dimethylaminoethanol, 2-(N,N'-dimethylaminoethoxy)ethanol, N,N',N-tris-(dialkylaminoalkyl)-hexahydrothiazines such as N,N',N-tris/(dimethylaminopropyl)-s-hexa-hydrothazine, tetraalkylammonium hydroxides such as tetramethyl ammonium hydroxide, alkaline hydroxides such as sodium hydroxide, alkaline alcoholates such as sodium methylate, alkaline salts of long-chain fatty acids, iron(II) chloride, zinc chloride, lead octoate, tin salts such as tin dioctate, tin diethylhexanoate, dibutyl tin dilaurate, dibutyldilauryl tin mercaptide, titanium compounds such as titanium(IV) butylate, organometallic compounds of tin, lead, iron, titanium, bismuth and zirconium, tin oxides and sulphides, and bismuth carboxylates.

The polyurethane adhesive obtained as described above, characterized by a free monomer below 0.1% by weight ("free monomer"), does not require hazard labelling, as it is completely safe for the user and contains no substances liable to migrate from the packaging to the food (primary aromatic amines and cyclic esters), even when the packaged product has a long shelf life.

### Polyol crosslinker

The polyol crosslinker for use in the kit of the present invention may any polyol suitable for curing the isocyanate-functionalised, aliphatic polyurethane prepolymer for use in the invention.

The polyol crosslinker for use in the kit of the present invention may be selected from linear or branched polyethers or polyester polyols. The poly crosslinker for use in the invention may be a mixture of polyester polyol and polyether polyol. The polyol crosslinker for use in the invention may be polyester polyol formed from glycols, such as propylene glycol, and dicarboxylic acids, including aliphatic dicarboxylic acids such as adipic acid. The polyol crosslinker for use in the invention may be a polyester comprising tertiary amine groups in the backbone.

### Laminates

There is a significant market related to adhesively formed multiply laminates for retort applications. Typical structures include the following combinations of substrates PET/CPP, PET/Al/CPP, PET/Al/OPA/CPP, PET-SiOx/CPP, PET-AlOx/CPP, OPA/CPP, OPA/LDPE, PET/Al/LDPE, VM-PET, AlOx-PET, SiOx-PET, AlOx-OPP, SiOx-OPP, AlOx-OPE, SiOx-OPE, AlOx-OPA, SiOx-OPA, PET/OPA/Al/CPP, OPA/VM-PET/LLDPE, PET/OPA/CPP, PET/OPA-SiOx/CPP, PET/OPA-AlOx/CPP, PET-SiOx/OPA/CPP, PET-AlOx/OPA/CPP, OPP/CPP, OPP-SiOx/OPA/CPP, OPP-AlOx/OPA/CPP, OPE-SiOx/OPA/CPP, OPE-AlOx/OPA/CPP, OPA-SiOx/OPA/CPP, OPA-AlOx/OPA/CPP.

The adhesive kit of the invention can be used with any of the above-mentioned substrates to form laminates.

### Retort Conditions

The lamination adhesive kit of the invention provides laminates with improved bonding strength under retort conditions relative to comparative laminates. Retort conditions involve placing a sealed retort package under temperatures for a period of time. For example, retort conditions may involve heating a package at between 115 °C and 150 °C for between 10 and 60 mins, such as heating a package between 120 °C and 140 °C for between 20 and 35 minutes. Retort conditions may involve pressures of between 1.5 and 4 bar, such as between 1.5 and 3 bar.

### EXAMPLES

The invention is defined by the following non-limiting examples, which further illustrate the invention and are not intended, nor should they be interpreted to, limit the scope of the invention.

### Test methods

Free diisocyanate monomer content (e.g., %HDI, %XDI): Determined by gas chromatography with internal standard according to ASTM D3432.

Reactive NCO group content (%NCO): Determined by back-titration with an excess of n-butylamine acid according to ASTM D2572.

Viscosity: Determined using Brookfield rotational viscometer Mod. LVDVII according to ASTM D1084 at the temperature specified.

Hydroxyl Value (OH Number): This is defined as the number of milligrams of potassium hydroxide required to neutralize the acetic acid taken up on acetylation of one gram of a chemical substance that contains free hydroxyl groups. The standard procedure as defined in ISO 4629-1:2016(E) is used to determine the Hydroxyl value.

### Molecular Weight:

a) The molecular weight of non-polymeric or oligomeric compounds (i.e. defined monomeric species) is defined and calculated by the molecular structure of the compound. Usually, this is given by the supplier technical data sheet of the monomer or can be found on the webpage of the European Chemical Agency (ECHA).
b) Oligomeric and polymeric species typically comprise a distribution of chain lengths and thus a distribution of molecular weights. Accordingly, the molecular weight of oligomeric and polymeric species (as well as components existing as a mixture of species with individual molecular weights above 500Da (and thus having a distribution - e.g. vegetable oils) is measured by Gel Permeation Chromatography (GPC) conducted on a Hewlett-Packard 1050 Series HPLC system equipped with two GPC Ultrastyragel columns, 103 and 104 Å (5 µm mixed, 300 mm x 19 mm, Waters Millipore Corporation, Milford, MA, USA) and THF as mobile phase. The molecular weight is calculated by comparison with a polystyrene standard. The skilled person will appreciate that this definition of molecular weight applies to polymeric materials which typically have a molecular weight distribution.

Unless otherwise stated, the molecular weight reported herein for oligomers and polymers is the number average molecular weight.

### Example 1: Synthesis of polyester polyol

The polyester polyol example 1 is prepared by mixing the following diols and dicarboxylic acids and reacting them in a typical condensation polymerization using an esterification reactor and well-known esterification conditions.

**Table 1: Ingredients used to prepare the polyester polyol example 1**

| **Components** | **% Range** |
|---|---|
| Isophthalic acid | 20-30 |
| Sebacic Acid | 20-30 |
| Monoethylene Glycol | 10-20 |
| NeoPentyl Glycol | 5-15 |
| 1,6-Hexanediol | 5-15 |
| 3 methyl 1-5 pentane diol | 5-15 |

Example 1 polyester polyol thus obtained has the following characteristics:
OH number = 265 mg KOH/g
Viscosity at 23°C = 3,000 mPas

### Example 2: Synthesis of NCO-terminated polyurethane prepolymer

550 Parts of xylylene diisocyanate (XDI) is added to a 1-liter reaction flask equipped with agitator and reflux condenser, continuously fluxed with nitrogen. The mixture is heated at 50°C and 450 parts of Example 1 polyester polyol A (OH-terminated polyester polyol with 2 functional groups and a number? average Mw of 420 g/mol) are dripped into the mixture in 240 minutes under stirring, monitoring the temperature of the reaction mixture and adjusting the polyol addition rate to ensure that it never exceeds 60°C.

At the end of the addition the mixture is heated to 80°C for 2 hours until the %NCO is about 15.5%.

The product thus obtained is distilled in a thin-layer evaporator at a pressure of about 0.1 mbar and a temperature of 140°C to remove the unreacted monomer. 760 parts of a transparent colorless liquid with the following characteristics are obtained:
%NCO = 7.6%
Viscosity at 50°C = 18,700 mPas
%XDI = 0.04wt%

### Example 3: Preparation of solvent free aliphatic isocyanate prepolymer with residual monomer level lower than 0.1%.

700 parts of the Example 2 material is mixed with 300 parts of a low viscosity HDI trimer with residual HDI content <0.1% (Polurgreen MT 100 LV 01) and 1000 parts of a transparent colorless liquid with the following characteristics are obtained:
%NCO = 12.3%
Viscosity at 40°C = 11,000 mPas
%XDI = 0.04%
%HDI = 0.04%

Example 3 is a solvent free aliphatic isocyanate prepolymer with residual monomer level lower than 0.1% by weight prepared following the method previously described in this application. Its performance has been evaluated in PET (12µm)/aluminium (8µm)/ cast polypropylene (CPP) (60µm) triplex structures comparatively to solvent free aromatic adhesives. Laminates, using the adhesives described in the table below were produced on a Labo Combi 400 laminator made by Nordmeccanica Group using the following conditions:
Coating weight: 2.5 gsm/dry;
Adhesive Roller Speed: 80;
Adhesive Roller Temp: 50°C;
Application Roller Temp: 50°C
Tension Unwinder A: 23 N;
Tension Unwinder B: 20 N;
Tension Rewinder (Laminate): 28 N;
Coating head pressure: 3 bars;
Nip pressure: 3 bars;
Nip temperature 50°C;
Laminates cured at 20°C for 20 days.

**Table 2: Comparative and inventive adhesive systems and mix ratios**

| Sample | Base (NCO) | Hardener (OH) | Mix ratio | Description |
|---|---|---|---|---|
| 1 | NS4158A | HA328B | 100 : 50 | Commercial aromatic-aliphatic high-performance solvent-free adhesive |
| 2 | ZA1000 | ZB301 | 100 : 40 | Commercial ultra-low monomer-free solvent-free aromatic adhesive |
| 3 | Example 3 | MP40 | 100 : 70 | Aliphatic retortable solvent-free adhesive prototype cured with various polyols |
| 4 | Example 3 | MP70 | 100 : 85 | |
| 5 | Example 3 | HA450B | 100 : 60 | |
| 6 | Example 3 | ZB301 | 100 : 60 | |

Sunlam NS-4158A (Polyurethane polyisocyanate) / HA-328 (Polyester polyol) is a 2 component, solvent-free, partially aromatic lamination adhesive which can be processed at 50°C. The polyurethane prepolymer (NS-4158A) is aromatic, i.e., the polyurethane comprises monomeric units derived from aromatic isocyanates.

Sunlam ZA-1000 (Polyurethane polyisocyanate) / ZB-301 (Polyester polyol based on propylene glycol, trimethylol propane combined with adipic acid, containing a small amount of a tetraol with tertiary amines on its backbone) is a commercial two component, aromatic, solvent-free, ultra-low isocyanate monomer (<0.1wt%) lamination adhesive, which can be processed at 50-55°C. The polyurethane (ZA-1000) is aromatic, i.e., the polyurethane comprises monomeric units derived from aromatic isocyanates

MP40 is a 60/40 mixture of DIC Dry HA93 0 (Polyester Polyol, DIC Graphics Corporation) and Smack MP-40 (Kao Corporation). Smack MP-40 is polypropyleneglycol monomethylether.

MP70 is a 60/40 mixture of DIC Dry HA93 0 (Polyester Polyol, DIC Graphics Corporation) and Smack MP-70 (Kao Corporation). Smack MP-70 is polypropyleneglycol monomethylether.

Sunlam HA450B is a commercial, solvent-free polyester polyol based on monoethylene glycol, neopentyl glycol, trimethylolpropane combined with Isophthalic and Adipic acids, which is usually used in combination with aromatic isocyanate-functionalised prepolymers.

The bond strengths measured at room temperature, expressed in N/15mm and measured at 100mm/min, between the Aluminium and the CPP were recorded subsequently to various thermal treatments, the results are presented in the table below:

**Table 3: Bond strengths of selected adhesives before and after pasteurisation and retort**

| Sample | Initial Bond Strength | Bond strength after pasteurisation test (95°C for 1h) | Bond strength after low retort test (121°C for 30min) | Bond strength at RT after high retort test (135°C for 20min) |
|---|---|---|---|---|
| 1 | 5.2 (Ad-Al) | 2.7 (Ad-Al) | 0.5 (Ad-Al) | Delamination |
| 2 | 10 (Alu-F) | 1.6 (Ad-Al) | 0.5 (Ad-Al) | Delamination |
| 3 | 9.5 (Alu-F) | 4.4 (Alu-F) | 5 (Ad-Al) | 4.1 (Ad-Al) |
| 4 | 9.5 (Alu-F) | 4.0 - 4.6 (Ad-Al & Alu-F) | 3.6 - 4 (Ad-Al & Alu-F) | 3.1 (Ad-Al) |
| 5 | 10 (Alu-F) | 3.6 - 4.2(Ad-Al & Alu-F) | 4.5 (Ad-Al & Alu-F) | 4.3 - 4.6 (Ad-Al & Alu-F) |
| 6 | 11.5 (Alu-F) | NA | 7.8 (Ad-Al) | 5 (Ad-Al) |

| | | | | |
|---|---|---|---|---|
| Alu - F = aluminium failure / Ad-Alu = Adhesive failure. | | | | |

The comparative examples (Samples 1 & 2) using aromatic based polyisocyanate prepolymers with standard or ultra-low level of free monomer failed the high retort testing and almost failed the low retort testing, the laminates surviving the low retort process keeping their aspect not showing delamination but finishing with almost no bond strength making them unfit for use.

The four samples based on the inventive Example 3 (samples 3, 4, 5 & 6) cured with various polyol hardeners survived the low and high retort processes keeping their aspect and integrity while displaying adequate bond strength.

The present invention has been described in detail, including the various embodiments thereof. However, it will be appreciated that those skilled in the art, upon consideration of the present disclosure, may make modifications and/or improvements on this invention that fall within the scope and spirit of the invention.

### NUMBERED EMBODIMENTS OF THE INVENTION

The invention is defined by the following numbered embodiments, which form part of the description.
1. A solvent-free, lamination adhesive kit comprising:
   a) an isocyanate-functionalised, aliphatic polyurethane prepolymer comprising monomeric units derived from aliphatic isocyanate monomers; and
   b) a polyol crosslinker,
      wherein the amount of free isocyanate monomer present in the polyurethane prepolymer is less than or equal to 0.1% (w/w) of said prepolymer.
2. The kit of embodiment 1, wherein the aliphatic isocyanate monomers are diisocyanates selected from the group consisting of hexamethylene diisocyanate, isophorone diisocyanate, methylene dicyclohexyl diisocyanate, xylylene diisocyanate, tetramethyl xylene diisocyanate, pentamethylene diisocyanate, and combinations thereof.
3. The kit of any preceding embodiment, wherein the aliphatic isocyanate monomers are diisocyanates selected from the group consisting of isophorone diisocyanate, 1,6-hexane diisocyanate, xylylene diisocyanate, and combinations thereof.
4. The kit of any preceding embodiment, wherein the isocyanate-functionalised, aliphatic polyurethane prepolymer is difunctionalised with isocyanate groups, optionally wherein the isocyanate-functionalised, aliphatic polyurethane prepolymer is linear and functionalised with an isocyanate group at each terminus.
5. The kit of any preceding embodiment, wherein the isocyanate-functionalised, aliphatic polyurethane prepolymer has a viscosity at 80 °C of between 800 mPa and 20,000 mPas, such as between 1,000 mPas and 10,000 mPas, or between 2,000 mPas and 7,000 mPas; wherein the viscosity is measured according to the method described in the description.
6. The kit of any preceding embodiment, wherein the isocyanate-functionalised, aliphatic polyurethane prepolymer has an isocyanate group content (%NCO) of between 3% and 16%, such as between 5% and 10%.
7. The kit of any preceding embodiment, wherein the isocyanate-functionalised, aliphatic polyurethane prepolymer is derived from greater than 80mol% aliphatic isocyanates, relative to the total moles of isocyanates incorporated into the prepolymer, such as greater than 90 mol%, or greater than 95mol%, aliphatic isocyanates, relative to the total moles of isocyanates incorporated into the prepolymer.
8. The kit of any preceding embodiment, wherein the only isocyanates incorporated into the isocyanate-functionalised, aliphatic polyurethane prepolymer are aliphatic isocyanates.
9. The kit of any preceding embodiment, wherein the isocyanate-functionalised, aliphatic polyurethane prepolymer is derived from a polyester polyol and/or a polyether polyol.
10. The kit of embodiment 9, wherein the isocyanate-functionalised, aliphatic polyurethane prepolymer is derived from a polyester polyol comprising monomeric units derived from aromatic monomers.
11. The kit of embodiments 9 or 10, wherein the isocyanate-functionalised, aliphatic polyurethane prepolymer is derived from at least 50wt% of polyester polyol relative to the total amount of polyols incorporated into said prepolymer.
12. The kit of any one of embodiments 9 to 11, wherein the polyester polyol comprises monomeric units derived from a mixture of aromatic and aliphatic dicarboxylic acids.
13. The kit of any one of embodiments 9 to 12, wherein the polyester polyol comprises between 10 and 55wt% of monomeric units derived from aromatic monomers, such as between 15 and 45wt%, or between 15 and 35wt% of monomeric units derived from aromatic monomers.
14. The kit of any one of embodiments 9 to 13, wherein the polyester polyol comprises between 45wt% and 90wt% of monomeric units derived from aliphatic monomers, such as between 55 and 85wt%, or between 65 and 85wt% of monomeric units derived from aliphatic monomers.
15. The kit of any one of embodiments 9 to 14, wherein the polyester polyol comprises monomer units derived from a mixture of linear and branched glycols; optionally wherein the linear and branched glycols have a molecular weight of less than 500 gmol⁻¹, such as less than 200 gmol⁻¹.
16. The kit of any one of embodiments 9 to 15, wherein the polyester polyol and/or polyether polyol each have a number average molecular weight of less than 1000 g/mol.
17. The kit of any one of embodiments 9 to 16, wherein the polyester polyol and/or polyether polyol is linear.
18. The kit of any preceding embodiment, wherein the polyol crosslinker does not comprise a silane compound capable of reacting with isocyanates, such as an amino-silane.
19. The kit of any preceding embodiment, wherein the polyurethane prepolymer is incorporated into a composition further comprising a further polyisocyanate
20. The kit of embodiment 19, wherein said further polyisocyanate is selected from the group consisting of a hexamethylenediisocyanate trimer, a hexamethylenediisocyanate allophanate, or combinations thereof.
21. A laminate adhesive comprising the components of the solvent-free, lamination adhesive kit according to any preceding embodiment mixed together in a single composition.
22. A retort pouch comprising the laminate adhesive of embodiment 21.
23. A method of providing a multi-laminate structure, comprising
   a) forming a laminate adhesive from the components of the kit of any one of embodiments 1 to 20 or providing the laminate adhesive of embodiment 21; and
   b) applying the laminate adhesive onto a flexible film.
24. The method of embodiment 23, wherein the flexible film is selected from the group consisting of polyethylene terephthalate, Nylon, aluminium, orientated polypropylene, cast polypropylene, low density polyethylene, linear low density polyethylene, vacuum modified polyethylene terephthalate , aluminium oxide-polyethylene terephthalate, silicon oxide-polyethylene terephthalate , aluminium oxide-orientated polypropylene, silicon oxide coated orientated polypropylene, aluminium oxide-orientated polyethylene, silicon oxide-orientated polyethylene, aluminium oxide-Nylon and silicon oxide-Nylon , and any coated film thereof.
25. The method of embodiments 23 or 24, comprising applying the adhesive at press speeds in excess of 50m/min, or in excess of 100m/min.
26. A laminate adhesive structure resulting from the method of any one or more of embodiments 23 to 25.
27. The structure of embodiment 26, which is suitable for the preparation of retort pouches wherein no delamination failures occur at retort conditions of 100°C, and greater.
28. The structure of embodiments 26 or 27, wherein the T-peel bond strengths between layers of the laminate are greater than 1.5, or greater than 2.0 or greater than 2.5 N/15mm before and after retort.
29. A method of making the kit of any preceding embodiment, comprising the steps of
   a) reacting an aliphatic isocyanate with a polyester and/or polyether polyol to obtain an isocyanate-functionalised, aliphatic polyurethane prepolymer comprising monomeric units derived from aliphatic isocyanate monomers;
   b) reducing the residual isocyanate monomer present in the prepolymer to less than 0.1% (w/w) of the prepolymer;
   c) introducing a polyol crosslinker to the kit.
30. The method of embodiment 29, wherein the aliphatic isocyanate monomers are diisocyanates selected from the group consisting of hexamethylene diisocyanate, isophorone diisocyanate, methylene dicyclohexyl diisocyanate, xylylene diisocyanate, tetramethyl xylene diisocyanate, pentamethylene diisocyanate, and combinations thereof.
31. The method of embodiment 29 or 30, wherein the aliphatic isocyanate monomers are diisocyanates selected from the group consisting of isophorone diisocyanate, 1,6-hexane diisocyanate, xylylene diisocyanate, and combinations thereof.
32. The method of any one of embodiments 29 to 31, wherein the amount of isocyanate monomer is reduced by stripping the prepolymer using a series of one or more thin layer evaporators and/or molecular evaporators.
33. The method of any one of embodiments 29 to 32, wherein the isocyanate-functionalised, aliphatic polyurethane prepolymer is the isocyanate-functionalised, aliphatic polyurethane prepolymer according to any one of embodiments 4 to 11.
34. The method of any of one of embodiments 29 to 33, wherein step a) comprises reacting the aliphatic isocyanate with a polyester polyol.
35. The method of embodiment 34, wherein the polyester polyol is the polyester polyol according to any one of embodiments 12 to 17.
36. The method of any of embodiments 29 to 35, wherein before step a), the method further comprises the step of reacting a mixture of aromatic and aliphatic dicarboxylic acids with at least one polyol to form the polyester polymer.
37. The method of claim 36, wherein the at least one polyol is a mixture of linear and branched glycols, optionally wherein the linear and branched glycols have a molecular weight of less than 500 gmol⁻¹, such as less than 200 gmol⁻¹.
38. The method of any one of embodiments 29 to 27, which is free of solvent.
39. Use of the kit according to any preceding embodiment for forming a laminate adhesive.
40. The use according to embodiment 39, wherein the laminate adhesive forms part of a retort packaging, such as a pouch.
41. Use of the kit according to any preceding embodiment to improve bonding strength under retort conditions of a multi-laminate structure formed from a flexible film and a laminate adhesive formed from the components of said kit.
42. The use according to embodiment 41, wherein the retort conditions comprise heating at 100 °C or higher for a period of 20 minutes, such as heating at 120 °C for 30 minutes or 135 °C for 20 minutes.

## Claims

1. A solvent-free, lamination adhesive kit comprising:
a) an isocyanate-functionalised, aliphatic polyurethane prepolymer comprising monomeric units derived from aliphatic isocyanate monomers; and
b) a polyol crosslinker,
wherein the amount of free isocyanate monomer present in the polyurethane prepolymer is less than or equal to 0.1% (w/w) of said prepolymer.

2. The kit of claim 1, wherein the aliphatic isocyanate monomers are diisocyanates selected from the group consisting of hexamethylene diisocyanate, isophorone diisocyanate, methylene dicyclohexyl diisocyanate, xylylene diisocyanate, tetramethyl xylene diisocyanate, pentamethylene diisocyanate, and combinations thereof; optionally
wherein the aliphatic isocyanate monomers are diisocyanates selected from the group consisting of isophorone diisocyanate, 1,6-hexane diisocyanate, xylylene diisocyanate, and combinations thereof.

3. The kit of any preceding claim, wherein the isocyanate-functionalised, aliphatic polyurethane prepolymer is difunctionalised with isocyanate groups, optionally wherein the isocyanate-functionalised, aliphatic polyurethane prepolymer is linear and functionalised with an isocyanate group at each terminus.

4. The kit of any preceding claim, wherein
i) the isocyanate-functionalised, aliphatic polyurethane prepolymer has a viscosity at 80 °C of between 800 mPa and 20,000 mPas, such as between 1,000 mPas and 10,000 mPas, or between 2,000 mPas and 7,000 mPas; wherein the viscosity is measured according to the method described in the description; and/or
ii) the isocyanate-functionalised, aliphatic polyurethane prepolymer has an isocyanate group content (%NCO) of between 3% and 16%, such as between 5% and 10%; and/or
iii) the isocyanate-functionalised, aliphatic polyurethane prepolymer is derived from greater than 80mol% aliphatic isocyanates, relative to the total moles of isocyanates incorporated into the prepolymer, such as greater than 90 mol%, or greater than 95mol%, aliphatic isocyanates, relative to the total moles of isocyanates incorporated into the prepolymer; and/or
d) wherein the only isocyanates incorporated into the isocyanate-functionalised, aliphatic polyurethane prepolymer are aliphatic isocyanates.

5. The kit of any preceding claim, wherein the isocyanate-functionalised, aliphatic polyurethane prepolymer is derived from a polyester polyol and/or a polyether polyol; optionally wherein the isocyanate-functionalised, aliphatic polyurethane prepolymer is derived from a polyester polyol comprising monomeric units derived from aromatic monomers.

6. The kit of claim 5, wherein
i) the isocyanate-functionalised, aliphatic polyurethane prepolymer is derived from at least 50wt% of polyester polyol relative to the total amount of polyols incorporated into said prepolymer; and/or
ii) the polyester polyol comprises monomeric units derived from a mixture of aromatic and aliphatic dicarboxylic acids; and/or
iii) the polyester polyol comprises between 10 and 55wt% of monomeric units derived from aromatic monomers, such as between 15 and 45wt%, or between 15 and 35wt% of monomeric units derived from aromatic monomers.

7. The kit of claims 5 or 6, wherein
i) the polyester polyol comprises between 45wt% and 90wt% of monomeric units derived from aliphatic monomers, such as between 55 and 85wt%, or between 65 and 85wt% of monomeric units derived from aliphatic monomers; and/or wherein the polyester polyol comprises monomer units derived from a mixture of linear and branched glycols; optionally wherein the linear and branched glycols have a molecular weight of less than 500 gmol⁻¹, such as less than 200 gmol⁻¹; and/or
ii) the polyester polyol and/or polyether polyol each have a number average molecular weight of less than 1000 g/mol; and/or
iii) the polyester polyol and/or polyether polyol is linear.

8. The kit of any preceding claim, wherein
i) the polyol crosslinker does not comprise a silane compound capable of reacting with isocyanates, such as an amino-silane; and/or
ii) the polyurethane prepolymer is incorporated into a composition further comprising a further polyisocyanate; optionally
wherein said further polyisocyanate is selected from the group consisting of a hexamethylenediisocyanate trimer, a hexamethylenediisocyanate allophanate, or combinations thereof.

9. A laminate adhesive comprising the components of the solvent-free, lamination adhesive kit according to any preceding claim mixed together in a single composition.

10. A retort pouch comprising the laminate adhesive of claim 9.

11. A method of providing a multi-laminate structure, comprising
i) forming a laminate adhesive from the components of the kit of any one of claims 1 to 8 or providing the laminate adhesive of claim 9; and
ii) applying the laminate adhesive onto a flexible film.

12. The method of claim 11, wherein
i) the flexible film is selected from the group consisting of polyethylene terephthalate, Nylon, aluminium, orientated polypropylene, cast polypropylene, low density polyethylene, linear low density polyethylene, vacuum modified polyethylene terephthalate , aluminium oxide-polyethylene terephthalate, silicon oxide-polyethylene terephthalate , aluminium oxide-orientated polypropylene, silicon oxide coated orientated polypropylene, aluminium oxide-orientated polyethylene, silicon oxide-orientated polyethylene, aluminium oxide-Nylon and silicon oxide-Nylon , and any coated film thereof; and/or
ii) the method further comprises applying the adhesive at press speeds in excess of 50m/min, or in excess of 100m/min.

13. A method of making the kit of any preceding claim, comprising the steps of
a) reacting an aliphatic isocyanate with a polyester and/or polyether polyol to obtain an isocyanate-functionalised, aliphatic polyurethane prepolymer comprising monomeric units derived from aliphatic isocyanate monomers;
b) reducing the residual isocyanate monomer present in the prepolymer to less than 0.1% (w/w) of the prepolymer;
c) introducing a polyol crosslinker to the kit.

14. The method of claim 13, wherein
i) the aliphatic isocyanate monomers are diisocyanates selected from the group consisting of hexamethylene diisocyanate, isophorone diisocyanate, methylene dicyclohexyl diisocyanate, xylylene diisocyanate, tetramethyl xylene diisocyanate, pentamethylene diisocyanate, and combinations thereof; and/or
ii) the aliphatic isocyanate monomers are diisocyanates selected from the group consisting of isophorone diisocyanate, 1,6-hexane diisocyanate, xylylene diisocyanate, and combinations thereof; and/or
iii) the amount of isocyanate monomer is reduced by stripping the prepolymer using a series of one or more thin layer evaporators and/or molecular evaporators.

15. The method of claims 13 or 14, wherein
i) the isocyanate-functionalised, aliphatic polyurethane prepolymer is the isocyanate-functionalised, aliphatic polyurethane prepolymer according to any one of claims 3 to 6; and/or
ii) step a) comprises reacting the aliphatic isocyanate with a polyester polyol; optionally wherein the polyester polyol is the polyester polyol according to claims 6 or 7; and/or
iii) before step a), the method further comprises the step of reacting a mixture of aromatic and aliphatic dicarboxylic acids with at least one polyol to form the polyester polymer; optionally wherein the at least one polyol is a mixture of linear and branched glycols, optionally wherein the linear and branched glycols have a molecular weight of less than 500 gmol⁻¹, such as less than 200 gmol⁻¹.

16. The method of any one of claims 13 to 15, which is free of solvent.

17. Use of the kit according to any preceding claim for forming a laminate adhesive; optionally wherein the laminate adhesive forms part of a retort packaging, such as a pouch.

18. Use of the kit according to any preceding claim to improve bonding strength under retort conditions of a multi-laminate structure formed from a flexible film and a laminate adhesive formed from the components of said kit; optionally wherein the retort conditions comprise heating at 100 °C or higher for a period of 20 minutes, such as heating at 120 °C for 30 minutes or 135 °C for 20 minutes.
